(19) Europäisches Patentamt
European Patent Office
Office européen des brevets

(11) **EP 3 162 165 B1**

(12) **EUROPÄISCHE PATENTSCHRIFT**

(45) Veröffentlichungstag und Bekanntmachung des Hinweises auf die Patenterteilung:
**12.02.2020 Patentblatt 2020/07**

(21) Anmeldenummer: **15730964.2**

(22) Anmeldetag: **18.06.2015**

(51) Int Cl.:
*H05B 3/44* (2006.01)      *H05B 3/62* (2006.01)
*B01J 19/24* (2006.01)     *F24H 1/10* (2006.01)
*C10G 9/24* (2006.01)      *H05B 3/00* (2006.01)
*F16L 53/37* (2018.01)

(86) Internationale Anmeldenummer:
**PCT/EP2015/001237**

(87) Internationale Veröffentlichungsnummer:
**WO 2015/197181 (30.12.2015 Gazette 2015/52)**

(54) **EINRICHTUNG UND VERFAHREN ZUM HEIZEN EINES FLUIDES IN EINER ROHRLEITUNG MIT DREHSTROM**

DEVICE AND METHOD FOR HEATING A FLUID IN A PIPE WITH THREE-PHASE CURRENT

DISPOSITIF ET PROCÉDÉ DE CHAUFFAGE D'UN FLUIDE DANS UNE CONDUITE À COURANT TRIPHASÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.06.2014 EP 14002193**

(43) Veröffentlichungstag der Anmeldung:
**03.05.2017 Patentblatt 2017/18**

(73) Patentinhaber: **Linde AG**
**80331 München (DE)**

(72) Erfinder: **EDER, Kurt**
**81735 München (DE)**

(74) Vertreter: **Meilinger, Claudia Sabine**
**Linde AG**
**Technology & Innovation**
**Corporate Intellectual Property**
**Dr.-Carl-von-Linde-Straße 6-14**
**82049 Pullach (DE)**

(56) Entgegenhaltungen:
**EP-A2- 2 537 579      DE-A1- 2 362 628**
**DE-C1- 710 187**

EP 3 162 165 B1

**Beschreibung**

Die Erfindung betrifft eine Einrichtung zum Heizen eines Fluides, das in zumindest einer Rohrleitung geführt wird sowie ein entsprechendes Verfahren zum Heizen eines Fluides.

Eine derartige Einrichtung ist z.B. aus der DE2362628C3 bekannt. Diese weist zumindest eine elektrisch leitfähige Rohrleitung zur Aufnahme des Fluides auf, sowie zumindest eine Spannungsquelle oder Stromquelle, die dazu ausgebildet ist, einen Strom in der mindestens einen Rohrleitung zu erzeugen, der die Rohrleitung zum Heizen des Fluides heizt, indem aufgrund des elektrischen Widerstandes der mindestens einen Rohrleitung Joulesche Wärme in der Rohrleitung erzeugt wird, die proportional zu der dort umgesetzten elektrischen Leistung und der Zeitdauer ist, über die der Strom fließt.

Unter einem Fluid wird vorliegend ein gasförmiges und/oder flüssiges Medium verstanden.

Anstelle der oben genannten Direktheizung, bei der die Rohrleitung aus einem elektrisch leitfähigen Material besteht und selbst vom Strom durchflossen wird, ist es weiterhin auch bekannt, zum Erhitzen von Fluiden Heizelemente, wie z.B. selbstlimitierende Heizbänder, Konstantleistungsheizbänder oder mineralisolierte Festwiderstandsheizkabel an die Außenseite der zu heizenden Rohrleitung, in der das zu erhitzende Fluid geführt wird, anzubringen. Die jeweilige Rohrleitung mit den Heizbändern wird dabei in der Regel außen gegen Wärmeverlust an

die Umgebungsluft isoliert. Mittels Wärmeleitung oder Wärmestrahlung kann nun vom Heizkabel an die Rohrleitung und von der Rohrleitung an das darin befindliche bzw. strömende Medium Wärme abgegeben werden.

Bei der oben genannten Direktheizung ist es insbesondere wichtig, mindestens eine Isolierung, aus Redundanzgründen oft zwei Isolierungen, vorzusehen, die einen parallelen Strompfad zu der direkt mit Strom geheizten Rohrleitung verhindern.

Falls durch das Medium in der Rohrleitung die Isolierung in ihrer Wirksamkeit beeinträchtigt wird, muss aus Sicherheitsgründen die Direkt-Beheizung abgeschaltet werden. Der parallele Stromfluss in der Gesamtheit aller Anlagenteile erfolgt unkontrolliert. Es wird an nicht vorhersagbarer Stelle Wärme erzeugt, wobei bei schlechten elektrischen Verbindungen von Anlagenteilen auch Funken entstehen können, die insbesondere in explosionsgefährdeten Anlagen ein erhebliches Sicherheitsrisiko darstellen.

Hiervon ausgehend liegt der vorliegenden Erfindung die Aufgabe zugrunde, eine verbesserte Einrichtung sowie ein verbessertes Verfahren zum Heizen eines Fluides bereitzustellen, die bzw. das insbesondere ermöglicht, die Anzahl der üblicherweise vorzusehenden Isolierung(en) zu verringern, ohne die Nachteile eines parallelen Stromes zu riskieren.

Diese Aufgabe wird durch eine Einrichtung mit den Merkmalen des Anspruchs 1 gelöst. Vorteilhafte Ausgestaltungen der Erfindung sind u. a. in den zugehörigen Unteransprüchen angegeben.

Gemäß Anspruch 1 ist danach eine Mehrzahl an elektrisch leitfähigen Rohrleitungen zur Aufnahme des Fluides vorgesehen sowie eine Mehrzahl an Spannungsquellen. Erfindungsgemäß ist jeder Rohrleitung je eine Spannungsquelle zugeordnet ist, die mit der jeweiligen Rohrleitung verbunden ist, wobei die jeweilige Spannungsquelle dazu ausgebildet ist, einen elektrischen Strom in der jeweiligen Rohrleitung zu erzeugen, der die jeweilige Rohrleitung zum Heizen des Fluides erwärmt, wobei die Spannungsquellen M Außenleiter L1 bis LM aufweisen, wobei M eine natürliche Zahl größer oder gleich zwei ist, und wobei die Spannungsquellen dazu konfiguriert sind, an ihren Außenleitern L1 bis LM eine Wechselspannung bereitzustellen, wobei jene Wechselspannungen gegeneinander um $2\pi/M$ phasenverschoben sind, und wobei die Außenleiter L1 bis LM so mit der jeweiligen Rohrleitung 100 elektrisch leitend verbunden sind, dass eine Sternschaltung gebildet wird, bei der jeder Außenleiter über zumindest einen Teil der jeweiligen Rohrleitung elektrisch leitend mit dem Sternpunkt der Sternschaltung verbunden ist.

Es ist auch möglich, mehrere Sternschaltungen mit separaten Sternpunkten zu bilden. So kann z.B. für jede Rohrleitung eine separate Sternschaltung gebildet werden.

Grundsätzlich lässt sich die Erfindung auch auf eine einzelne Rohrleitung anwenden, der dann eine Spannungsquelle zugeordnet ist.

Gemäß einer bevorzugten Ausführungsform der Erfindung sind die Rohrleitungen als Reaktionsrohre eines Reformers ausgebildet.

Gemäß einer bevorzugten Ausführungsform der Erfindung ist vorgesehen, dass die Spannungsquellen jeweils einen Neutralleiter aufweisen, wobei die jeweilige Spannungsquelle dazu ausgebildet ist, zwischen den Außenleitern und dem Neutralleiter jeweils eine Wechselspannung bereitzustellen, wobei jene Wechselspannungen gegeneinander um $2\pi/M$ phasenverschoben sind. Bevorzugt ist der jeweilige Neutralleiter elektrisch leitend mit dem Sternpunkt verbunden.

Unter einer Sternschaltung wird vorliegend eine Zusammenschaltung von beliebig vielen Anschlüssen (M Anschlüsse, wobei ein ggf. vorhandener Neutralleiter auch mit dem Sternpunkt verbunden sein kann) über je einen Widerstand an einen gemeinsamen Punkt verstanden, der als Sternpunkt bezeichnet wird.

Der Sternpunkt führt mit Vorteil bei gleichmäßiger Belastung der M (z.B. M=3) Außenleiter keinen Strom (bei ungleichmäßiger Belastung lediglich die Differenz der Ströme bzw. bei hochohmiger Anbindung des Neutralleiters mit dem Sternpunkt der mindestens einen Rohrleitung eine Differenzspannung), so dass eine ansonsten übliche Isolierung am Einlass und am Auslass der Rohrleitung verzichtbar ist.

Bevorzugt ist daher die mindestens eine Rohrleitung oder die Mehrzahl an Rohrleitungen so konfiguriert, dass sich die Ströme im Sternpunkt aufheben. Mit anderen Worten weisen also bevorzugt die hergestellten, elektrisch leitendenden Verbindungen (die jeweils einen Teil der mindestens einen Rohrleitung umfassen) zwischen dem jeweiligen Außenleiter der mindestens einen Spannungsquelle und dem Sternpunkt den gleichen ohmschen Widerstand auf, so dass sich im Sternpunkt die einzelnen Ströme aufheben.

Hinsichtlich der Betriebserdung ist in der Regel bei vorhandenem Neutralleiter (z.B. TN-Netz) vorgesehen, den Sternpunkt der Spannungsquelle bzw. den N-Anschluss zu erden. Die Erdung kann dabei z.B. starr ausgeführt werden, niederohmig oder auch induktiv. Bei einem Dreileiternetz bzw. IT-Netz, bei dem kein Neutralleiter vorhanden ist, entfällt diese Betriebserdung.

Bei beiden vorgenannten Netzarten ist der Sternpunkt der besagten erfindungsgemäßen Sternschaltung bzw. der mindestens einen Rohrleitung bevorzugt geerdet, insbesondere starr geerdet. Bei einer Energieversorgung mit Neutralleiter (z.B. TN-Netz), bei der der Sternpunkt der Spannungsquelle (N-Anschluss) starr geerdet ist, kann die Erdung des Sternpunkts der besagten Sternschaltung bzw. der mindestens einen Rohrleitung gemäß einer Ausführungsvariante der Erfindung auch entfallen.

Bei der mindestens einen Rohrleitung bzw. der Mehrzahl an Rohrleitungen kann es sich um eine zusammenhängende Rohrleitung handeln. Die Rohrleitung kann jedoch auch mehrere Abschnitte aufweisen, die nicht miteinander in Fluidverbindung stehen und ggf. separat voneinander von je einem zu heizendem Fluid durchströmbar sind.

Gemäß einer bevorzugten Ausführungsform ist M=3, d.h., es wird ein Dreiphasenwechselstrom verwendet, der oftmals auch als Drehstrom bezeichnet wird. Es handelt sich dabei um einen Mehrphasenwechselstrom, der bekanntermaßen aus drei einzelnen Wechselströmen oder Wechselspannungen gleicher Frequenz besteht:

$$U_{L1}=U_0\cos(\omega t),$$

$$U_{L2}=U_0\cos(\omega t-120°),$$

$$U_{L3}=U_0\cos(\omega t-240°),$$

welche zueinander in ihren Phasenwinkeln fest um 120°, d.h., $2\pi/3$, verschoben sind.

Die Wechselspannungen erreichen ihre maximale Auslenkung zeitlich um je eine Drittelperiode versetzt nacheinander. Die zeitliche Verschiebung dieser so genannten Außenleiterspannungen zueinander wird durch einen Phasenverschiebungswinkel beschrieben. Die drei Leiter werden als Außenleiter bezeichnet und üblicherweise mit L1, L2 und L3 abgekürzt. Der Neutralleiter wird mit N bezeichnet.

Gemäß einer weiteren bevorzugten Ausführungsform der erfindungsgemäßen Einrichtung ist vorgesehen, dass die mindestens eine Rohrleitung bzw. die Rohrleitungen jeweils M Schenkel aufweisen (also z.B. bei M=3 einen ersten, einen zweiten sowie einen dritten Schenkel), wobei jeder Schenkel einen ersten und einen zweiten Endabschnitt sowie einen die beiden Endabschnitte miteinander fluidleitend sowie elektrisch leitend verbindenden mittleren Abschnitt aufweist.

Vorzugsweise sind die beiden Endabschnitte des jeweiligen Schenkels mit dem Sternpunkt verbunden, d.h., an dem jeweiligen Endabschnitt bzw. an zwei miteinander verbundenen Endabschnitten zweier benachbarter Schenkel ist ein elektrischer Kontakt zum Sternpunkt vorgesehen.

Weiterhin ist bevorzugt vorgesehen, dass die mittleren Abschnitte der Schenkel jeweils mit einem zugeordneten Außenleiter L1 bis LM (z.B. bei M=3 L1, L2 oder L3) der mindestens einen Spannungsquelle elektrisch leitend verbunden sind, d.h., an dem jeweiligen mittleren Abschnitt ist ein elektrischer Kontakt zum zugeordneten Außenleiter vorgesehen, wobei insbesondere im Falle des Drehstromes (M=3) der mittlere Abschnitt des ersten Schenkels mit dem L1-Außenleiter, der mittlere Abschnitt des zweiten Schenkels mit dem L2-Außenleiter und der mittlere Abschnitt des dritten Schenkels mit dem L3-Außenleiter verbunden sind. Jeder Außenleiter ist genau einem mittleren Abschnitt eines Schenkels eindeutig zugeordnet.

Die mindestens eine Rohrleitung ist weiterhin bevorzugt so konfiguriert, dass bei M Schenkeln der zweite Endabschnitt des ersten Schenkels mit dem ersten Endabschnitt des zweiten Schenkels fluidleitend sowie elektrisch leitend verbunden ist, und dass (bei M>2) der zweite Endabschnitt des zweiten Schenkels mit dem ersten Endabschnitt des dritten Schenkels fluid- sowie elektrisch leitend verbunden ist. Dies wird so fortgeführt, bis der letzte (M-te) Schenkel erreicht ist. Die M Schenkel der mindestens einen Rohrleitung sind insbesondere so miteinander verbunden, dass sie nacheinander von einem darin fließenden Fluid durchströmbar sind. Weiterhin bildet bevorzugt der erste Endabschnitt des ersten Schenkels einen Einlass zum Einspeisen des Fluides in die mindestens eine Rohrleitung, wobei der zweite Endabschnitt des M-ten Schenkels vorzugsweise einen Auslass zum Auslassen des Fluides aus der mindestens einen Rohrleitung bildet. Der besagte Auslass kann mit einem Einlass einer weiteren Rohrleitung in Fluidverbindung stehen. Des Weiteren kann der besagte Einlass der mindestens einen Rohrleitung mit einem Auslass einer weiteren Rohrleitung in Fluidverbindung stehen (vgl. unten).

Für den Fall von M=3 ist diesbezüglich bevorzugt die mindestens eine Rohrleitung so konfiguriert, dass der zweite Endabschnitt des ersten Schenkels mit dem ersten Endabschnitt des zweiten Schenkels fluidleitend sowie elektrisch leitend verbunden ist, und dass der zweite Endabschnitt des zweiten Schenkels mit dem ersten Endabschnitt des dritten Schenkels fluidleitend sowie elektrisch leitend verbunden ist, d.h., die drei Schenkel der mindestens einen Rohrleitung sind insbesondere so miteinander verbunden, dass sie nacheinander von einem darin fließenden Fluid durchströmbar sind. Weiterhin bildet bevorzugt der erste Endabschnitt des ersten Schenkels einen Einlass zum Einspeisen des Fluides in die mindestens eine Rohrleitung, wobei der zweite Endabschnitt des dritten Schenkels vorzugsweise einen Auslass zum Auslassen des Fluides aus der mindestens einen Rohrleitung bildet. Der besagte Auslass kann mit einem Einlass einer weiteren Rohrleitung in Fluidverbindung stehen. Des Weiteren kann der besagte Einlass der mindestens einen Rohrleitung mit einem Auslass einer weiteren Rohrleitung in Fluidverbindung stehen (vgl. unten).

Bevorzugt sind miteinander in Fluid- und elektrischer Verbindung stehende Endabschnitte zweier benachbarter Schenkel über einen gemeinsamen Kontakt elektrisch mit dem Sternpunkt bzw. Neutralleiter verbunden, wobei der Kontakt z.B. an einem Übergang der beiden miteinander verbundenen Endabschnitte vorgesehen sein kann.

Die besagten Schenkel können natürlich auch separat zueinander ausgebildet sein und entsprechend nicht miteinander in Fluidverbindung stehen. In diesem Fall können mehrere Fluidströme unabhängig voneinander durch die Schenkel geführt und geheizt werden. Die Endabschnitte der Schenkel bilden dann Ein- bzw. Auslässe über die die einzelnen Schenkel separat mit Fluid beschickt werden können.

Die besagten Schenkel sind, sofern sie miteinander verbunden sind, vorzugsweise einstückig über ihre Endabschnitte an benachbarte Schenkel angeformt. Andere fluidleitende und elektrisch leitende Verbindungen sind auch denkbar. Des Weiteren ist jeweils der zwischen zwei Endabschnitten eines Schenkels vorgesehene mittlere Abschnitt bevorzugt einstückig an die beiderseitig vorgesehenen Endabschnitte angeformt. Andere fluid- bzw. elektrisch leitende Verbindungen sind diesbezüglich auch denkbar. Grundsätzlich können die Schenkel alle erdenklichen Formen bzw. Verläufe annehmen.

Vorzugsweise sind die Schenkel im Wesentlichen hinsichtlich Ihrer Dimension und Geometrie bzw. Form identisch ausgestaltet, so dass sie im Wesentlichen gleiche ohmsche Verbraucher darstellen. Bei unterschiedlich ausgestalteten Schenkeln können ggf. ausgleichende Ohmsche oder kapazitive bzw. induktive Widerstände zusätzlich vorgesehen werden.

Gemäß einer besonders bevorzugten Ausführungsform der Erfindung sind die Schenkel jeweils als Schleife ausgebildet, wobei der mittlere Abschnitt des jeweiligen Schenkels ein Ende der jeweiligen Schleife ausbildet, das den beiden bevorzugt benachbart zueinander angeordneten Endabschnitten der jeweiligen Schleife gegenüberliegt, wobei insbesondere im Bereich des jeweiligen Endes der jeweils zugeordnete Außenleiter mit dem jeweiligen Schenkel elektrisch leitend verbunden ist. Das Ende der jeweiligen Schleife bzw. Schenkels wird dabei bevorzugt durch einen Umkehrbogen des jeweiligen mittleren Abschnitts gebildet, in dem das in dem jeweiligen Schenkel bzw. in der jeweiligen Schleife vom ersten Endabschnitt heran strömende Fluid seine Richtung ändert und zum zweiten Endabschnitt (oder umgekehrt) zurückfließt.

Vorzugsweise erstrecken sich die Schenkel bzw. Schlaufen der mindestens einen Rohrleitung jeweils entlang einer Längsachse, wobei die Schenkel bzw. Schleifen insbesondere entlang der Längsachse die gleiche Länge aufweisen (siehe auch oben).

Weiterhin ist bevorzugt vorgesehen, dass die Endabschnitte der Schenkel der mindestens einen Rohrleitung bzw. der Rohrleitungen mit dem jeweiligen elektrischen Kontakt zum Sternpunkt bzw. Neutralleiter in einem zentralen Bereich angeordnet sind, von dem aus sich die Schenkel entlang einer radialen Richtung nach außen erstrecken, und zwar insbesondere zu dem jeweiligen Ende bzw. Umkehrbogen, an dem bevorzugt der jeweilige elektrische Kontakt zum zugeordneten Außenleiter L1 bis LM (bzw. bei M=3 L1, L2 oder L3) vorgesehen ist.

Bei einer sternförmigen Anordnung dreier Schenkel einer Rohrleitung zueinander können die Längsachsen je zweier benachbarter Schenkel z.B. einen Winkel von 120° einschließen.

Erfindungsgemäß sind eine Mehrzahl der oben beschriebenen Rohrleitungen sowie insbesondere eine Mehrzahl an Spannungsquellen vorgesehen, wobei jeder Rohrleitung je eine Spannungsquelle zugeordnet ist. Die Außenleiter einer Spannungsquelle sind dann wiederum so mit der zugeordneten Rohrleitung verbunden, dass wiederum eine Sternschaltung gebildet wird, bei der jeder Außenleiter über zumindest einen Teil der jeweiligen Rohrleitung elektrisch leitend mit dem Sternpunkt der Sternschaltung verbunden ist, wobei ein ggf. vorhandener Neutralleiter der jeweiligen Spannungsquelle elektrisch leitend mit dem Sternpunkt der zugeordneten Rohrleitung verbunden sein kann (siehe oben).

Bevorzugt sind wiederum die Spannungsquellen als Dreiphasenwechselspannungsquellen ausgebildet (d.h. M=3), so dass der in der jeweiligen Rohrleitung erzeugte Strom zum direkten Joulschen Heizen der jeweiligen Rohrleitung ein Dreiphasenwechselstrom ist.

Die Rohrleitungen weisen also wiederum bevorzugt jeweils M Schenkel bzw. einen ersten, einen zweiten sowie einen dritten Schenkel auf (bei M=3), wobei jeder Schenkel der jeweiligen Rohrleitung einen ersten und einen zweiten Endabschnitt sowie einen die beiden Endabschnitte miteinander verbindenden mittleren Abschnitt aufweist. Die beiden Endabschnitte des jeweiligen Schenkels des jeweiligen Rohrleitungsabschnitts sind bevorzugt, wie oben beschrieben, elektrisch leitend mit dem Sternpunkt der jeweiligen Rohrleitung bzw. dem Neutralleiter N der zugeordneten Spannungsquelle verbunden, wohingegen die mittleren Abschnitte des jeweiligen Rohrleitungsabschnittes jeweils bevorzugt - wie oben beschrieben - mit einem zugeordneten Außenleiter (L1 bis LM bzw. bei M=3 L1, L2 oder L3) der zugeordneten Spannungsquelle verbunden sind.

Die einzelnen Schenkel der Mehrzahl an Rohrleitungen sind bevorzugt, wie oben dargelegt, miteinander verbunden (oder separat zueinander ausgebildet) und des Weiteren bevorzugt als Schleifen ausgebildet, wobei wiederum der mittlere Abschnitt des jeweiligen Schenkels bevorzugt ein Ende bzw. einen Umkehrbogen der jeweiligen Schleife ausbildet (siehe oben), wobei vorzugsweise im Bereich des jeweiligen Endes bzw. am jeweiligen Umkehrbogen der elektrische Kontakt zum jeweils zugeordneten Außenleiter (L1 bis LM bzw. bei M=3 L1, L2 oder L3) vorgesehen ist (siehe auch oben).

Vorzugsweise sind die Endabschnitte der Schenkel der jeweiligen Rohrleitung mit dem jeweiligen, ggf. gemeinsamen elektrischen Kontakt zum Sternpunkt bzw. Neutralleiter N in einem zentralen Bereich angeordnet, von dem aus sich die Schenkel der Rohrleitungen entlang einer radialen Richtung nach außen erstrecken, wobei die besagten Enden bzw. Umkehrbögen radial gesehen am weitesten außen liegen (z.B. auf einem gedachten Kreis um den zentralen Bereich herum).

Bei einer Mehrzahl an Rohrleitungen können mehrere oder auch sämtliche der Rohrleitungen in Serie miteinander in Fluidverbindung stehen, so dass sie nacheinander von dem Fluid durchströmbar sind.

Weiterhin besteht auch die Möglichkeit, einige oder sämtliche Rohrleitungen parallel zu verschalten, d.h., so zu konfigurieren, dass das Fluid in mehrere Teilströme aufgeteilt wird, die dann einzelne zugeordnete Rohrleitungen parallel durchströmen.

Eine beliebige Konfiguration von in Serie oder parallel geschalteten Rohrleitungen ist natürlich ebenfalls möglich.

Weiterhin wird das erfindungsgemäße Problem durch ein Verfahren zum Heizen zumindest eines Fluides unter Verwendung zumindest einer erfindungsgemäßen Einrichtung gelöst.

Dabei durchströmt das Fluid bevorzugt eine oder mehrere Rohrleitungen der erfindungsgemäßen Einrichtung und wird in diesen erhitzt, indem die mindestens eine Rohrleitung bzw. die mehreren Rohrleitungen durch einen in der mindestens einen Rohrleitung oder in den mehreren Rohrleitungen fließenden Mehrphasenwechselstrom bzw. Dreiphasenwechselstrom erhitzt wird, so dass in der mindestens einen Rohrleitung oder in den mehreren Rohrleitungen Joulesche Wärme erzeugt wird, die auf das Fluid übertragen wird, so dass dieses beim Durchströmen der mindestens einen Rohrleitung bzw. der mehreren Rohrleitungen erhitzt wird, und wobei als Fluid ein vorgewärmtes Gemisch aus Kohlenwasserstoffen und Dampf geheizt wird, um die Kohlenwasserstoffe aufzuspalten.

Gemäß einer Variante des erfindungsgemäßen Verfahrens ist vorgesehen, dass als Fluid ein thermisch zu spaltender Kohlenwasserstoff, insbesondere ein Gemisch aus Kohlenwasserstoffen, mit zumindest einer erfindungsgemäßen Einrichtung geheizt wird.

Gemäß einer weiteren Variante des erfindungsgemäßen Verfahrens ist alternativ oder ergänzend vorgesehen, dass als Fluid Wasser bzw. Wasserdampf mit zumindest einer erfindungsgemäßen Einrichtung geheizt wird, wobei jener Wasserdampf insbesondere auf eine Reaktoreintrittstemperatur im Bereich von 550°C bis 700°C geheizt wird und insbesondere dem bzw. den zu spaltenden Kohlenwasserstoffen zugegeben wird.

Gemäß einer weiteren Ausgestaltung des erfindungsgemäßen Verfahrens ist alternativ oder ergänzend vorgesehen, dass als Fluid ein vorgewärmtes Kohlenwasserstoff-Dampfgemisch mit zumindest einer erfindungsgemäßen Einrichtung geheizt wird, um die Kohlenwasserstoffe aufzuspalten. Die erfindungsgemäße Einrichtung wird also für den Wärmeeintrag im Reaktorteil eines Spaltofens zur Spaltung des vorgewärmten Kohlenwasserstoff-Dampfgemisches verwendet. Dies ist eine stark endotherme Reaktion, bei der das Produktgas den Reaktorteil mit Temperaturen von typischerweise 800°C bis 880 °C verlässt.

Insbesondere kann das zu spaltende Gemisch, das auch als Reformer-Einsatzgas bezeichnet wird, und das Wasserdampf sowie einen bzw. verschiedene Kohlenwasserstoffe (z.B. $CH_4$ bis Naphtha) sowie ggf. Wasserstoff und sonstige Komponenten, wie z.B. $N_2$, Ar, He, CO, $CO_2$, und/oder MeOH aufweist, mit dem erfindungsgemäßen Verfahren auf eine Reformereintrittstemperatur gebracht bzw. überhitzt werden, die bevorzugt im Temperaturbereich von 250°C bis 730 °C, bevorzugt 320 °C bis 650 °C liegt, insbesondere bei einem Druck des Einsatzgases im Bereich von 10 bar bis 50 bar, bevorzugt 15 bis 40 bar.

Weiterhin kann mittels des erfindungsgemäßen Verfahrens als Fluid die Verbrennungsluft des Reformerofens vorgewärmt werden, und zwar insbesondere auf eine Temperatur im Bereich von 200 °C bis 800 °C, bevorzugt 400 °C bis 700 °C.

Insbesondere kann weiterhin mittels des erfindungsgemäßen Verfahrens zumindest ein Reaktionsrohr bzw. Reaktionsrohre des Reformerofens bzw. das darin strömende Fluid beheizt werden (die mindestens eine Rohrleitung der erfindungsgemäßen Einrichtung kann also als Reaktionsrohr eines Reformers ausgebildet sein). Hier erfolgt also mittels des erfindungsgemäßen Verfahrens der Wärmeeintrag durch Direktbeheizung in die katalysatorgefüllten Reaktionsrohre des Reformerofens. Hierbei kann das Produktgas bestehend aus den Hauptkomponenten $H_2$, CO, $CO_2$, $CH_4$, $H_2O$ und Inerten zusätzlich während der Direktbeheizung noch parallel durch Brenner in der Strahlungszone des Reformerofens geheizt werden. Die Reaktion ist endotherm. Das reformierte Gas verlässt die Strahlungszone des Reformerofens in der Regel im Temperaturbereich von 780°C bis 1050 °C, bevorzugt 820 °C bis 950 °C. Der Druckbereich des Gases liegt bevorzugt im Bereich von 10 bar bis 50 bar, bevorzugt 15 bis 40 bar.

Insbesondere kann weiterhin mittels des erfindungsgemäßen Verfahrens als Fluid das zu spaltende, trockene Einsatzgas (also insbesondere vor der Vermischung mit Wasserdampf), das zumindest ein bzw. verschiedene Kohlenwasserstoffe (z.B. $CH_4$ bis Naphtha) sowie ggf. Wasserstoff und sonstige Komponenten, wie z.B. $N_2$, Ar, He, CO, $CO_2$ und/oder MeOH, aufweist, zur katalytischen Vorreinigung erhitzt werden, insbesondere auf eine Temperatur im Bereich von 100°C bis 500 °C, bevorzugt 200 °C bis 400 °C, und zwar bei einem Druck des Gases im Bereich von bevorzugt 10 bar bis 50 bar, bevorzugt 15 bis 45 bar.

Weiterhin kann allgemein das erfindungsgemäße Verfahren dazu verwendet werden als Fluid Wasser zu erhitzen, um z.B. in allen erdenklichen Prozessen Prozessdampf zu erzeugen.

Nachfolgend werden weitere Gegenstände der Erfindung (Punkte 1 und 16) sowie Ausgestaltungen des Gegenstandes gemäß Punkt 1 (Punkte 2 bis 15) dargestellt. Die in Klammern angegebenen Bezugszeichen beziehen sich auf die Figuren.

Punkt 1: Einrichtung zum Heizen eines Fluides, mit:

- zumindest einer elektrisch leitfähigen Rohrleitung (100) zur Aufnahme des Fluides (F), und
- zumindest einer mit der mindestens einen Rohrleitung (100) verbundenen Spannungsquelle (2), wobei die mindestens eine Spannungsquelle (2) dazu ausgebildet ist, einen elektrischen Strom in der mindestens einen Rohrleitung (100) zu erzeugen, der die mindestens einen Rohrleitung (100) zum Heizen des Fluides (F) erwärmt,

wobei die mindestens eine Spannungsquelle (2) zumindest M Außenleiter (L1,...,LM) aufweist, wobei M eine natürliche Zahl größer oder gleich zwei ist, und wobei die mindestens eine Spannungsquelle (2) dazu ausgebildet ist, an den Außenleitern (L1,...,LM) eine Wechselspannung bereitzustellen, wobei jene Wechselspannungen gegeneinander um $2\pi/M$ phasenverschoben sind, und wobei die Außenleiter (L1,...,LM) so mit der mindestens einen Rohrleitung (100) elektrisch leitend verbunden sind, dass eine Sternschaltung gebildet wird, bei der jeder Außenleiter (L1,...,LM) über zumindest einen Teil der mindestens einen Rohrleitung (100) elektrisch leitend mit dem Sternpunkt (S) der Sternschaltung verbunden ist.

Punkt 2: Einrichtung nach Punkt 1, wobei die Spannungsquelle (2) einen Neutralleiter (N) aufweist, wobei insbesondere der Neutralleiter (N) elektrisch leitend mit dem Sternpunkt (S) verbunden ist.

Punkt 3: Einrichtung nach einem der vorhergehenden Punkte, wobei M gleich drei ist. Punkt 4: Einrichtung nach einem der vorhergehenden Punkte, wobei die mindestens eine Rohrleitung (100) M Schenkel (101) aufweist, wobei jeder Schenkel (101) einen ersten und einen zweiten Endabschnitt (101a, 101c) sowie einen mittleren Abschnitt (101b) aufweist, der die beiden Endabschnitte (101a, 101c) miteinander fluidleitend sowie elektrisch leitend verbindet.

Punkt 5: Einrichtung nach Punkt 4, wobei die beiden Endabschnitte (101a, 101c, 102a, 102c, 103a, 103c) des jeweiligen Schenkels (101, 102, 103) elektrisch leitend mit dem Sternpunkt (S) verbunden sind.

Punkt 6: Einrichtung nach einem der Punkte 4 bis 5, wobei die mittleren Abschnitte (101b, 102b, 103b) der Schenkel (101, 102, 103) jeweils mit einem zugeordneten Außenleiter (L1, L2, L3) der mindestens einen Spannungsquelle (2) elektrisch leitend verbunden sind.

Punkt 7: Einrichtung nach Punkt 3 oder einem der Punkte 4 bis 6 soweit rückbezogen auf Punkt 3, wobei der zweite Endabschnitt (101c) des ersten Schenkels (101) mit dem ersten Endabschnitt (102a) des zweiten Schenkels (102) fluidleitend sowie elektrisch leitend verbunden ist, insbesondere einstückig an diesen angeformt ist, und wobei der zweite Endabschnitt (102c) des zweiten Schenkels (102) mit dem ersten Endabschnitt (103a) des dritten Schenkels (103) fluidleitend sowie elektrisch leitend verbunden ist, insbesondere einstückig an diesen angeformt ist, wobei insbesondere der erste Endabschnitt (101a) des ersten Schenkels (101) einen Einlass (3) zum Einspeisen des Fluides (F) in die mindestens eine Rohrleitung (100) bildet, und wobei insbesondere der zweite Endabschnitt (103c) des dritten Schenkels (103) einen Auslass (4) zum Auslassen des Fluides (F) aus der mindestens einen Rohrleitung (100) bildet.

Punkt 8: Einrichtung nach einem der Punkte 4 bis 6, wobei die Schenkel (101, 102, 103) nicht miteinander in Fluidverbindung stehen und dazu ausgebildet sind, separat voneinander je ein zu heizendes Fluid (F, F', F") zu führen.

Punkt 9: Einrichtung nach einem der Punkt 4 bis 8, wobei
die Schenkel (101, 102, 103) jeweils als Schleife ausgebildet sind, wobei der mittlere Abschnitt (101b, 102b, 103b) des jeweiligen Schenkels (101, 102, 103) ein Ende der jeweiligen Schleife (101, 102, 103) ausbildet, wobei insbesondere im Bereich des jeweiligen Endes der jeweils zugeordnete Außenleiter (L1, L2, L3) mit dem jeweiligen Schenkel (101, 102, 103) elektrisch leitend verbunden ist.

Punkt 10: Einrichtung nach einem der Punkte 4 bis 9, wobei sich die Schenkel (101, 102, 103) jeweils entlang einer Längsachse (A) erstrecken, wobei insbesondere die Schenkel (101, 102, 103), insbesondere entlang der jeweiligen Längsachse (A), die gleiche Länge aufweisen.

Punkt 11: Einrichtung nach einem der Punkte 4 bis 10, wobei die Endabschnitte (101a, 101c; 102a, 102c; 103a, 103c) der Schenkel (101, 102,103) der mindestens einen Rohrleitung (100) in einem zentralen Bereich (B) angeordnet sind, von dem aus sich die Schenkel (102, 102, 103) entlang einer radialen Richtung (R) nach außen erstrecken.

Punkt 12: Einrichtung nach Anspruch 10 oder 11, wobei die Längsachsen (A) je zweier benachbarter Schenkel (101, 102; 102, 103; 103, 101) einen Winkel von 120° einschließen.

Punkt 13: Einrichtung nach einem der vorhergehenden Punkte, wobei eine Mehrzahl an Rohrleitungen (100) sowie insbesondere eine Mehrzahl an Spannungsquellen (2) vorgesehen sind, wobei insbesondere jeder Rohrleitung (100) je eine Spannungsquelle (2) zugeordnet ist.

Punkt 14: Einrichtung nach Punkt 13, wobei mehrere oder sämtliche der Rohrleitungen (100) in Serie miteinander in Fluidverbindung stehen, so dass sie nacheinander von dem Fluid (F) durchströmbar sind.

Punkt 15: Einrichtung nach Punkt 13 oder 14, wobei mehrere oder sämtliche der Rohrleitungen (100) parallel konfiguriert sind, so dass das Fluid (F) auf jene parallel konfigurierten Rohrleitungen (100) aufteilbar ist.

Punkt 16. Verfahren zum Heizen eines Fluides (F) unter Verwendung einer Einrichtung gemäß einem der Punkte 1 bis 15.

Weitere Merkmale und Vorteile der vorliegenden Erfindung sollen bei der Beschreibung von Ausführungsbeispielen anhand der Figuren erläutert werden. Es zeigen:

Fig. 1    eine schematische Darstellung einer Rohrleitung einer erfindungsgemäßen Einrichtung;

Fig. 2    eine weitere Abwandlung der in Figur 1 gezeigten Ausführungsform;

Fig. 3    eine weitere schematische Darstellung einer Rohrleitung einer erfindungsgemäßen Einrichtung;

Fig. 4    eine Darstellung einer Anordnung mehrerer Rohrleitungen einer erfindungsgemäßen Einrichtung;

Fig. 5    schematische Darstellung der Verschaltung der Außenleiter und des Neutralleiters bei einem TN-Netz; und

Fig. 6    schematische Darstellung der Verschaltung der Außenleiter bei einem IT-Netz.

Im Folgenden werden zunächst der Einfachheit halber Ausführungsformen der Erfindung anhand einer Rohrleitung 100 dargestellt. Die anhand einer Rohrleitung dargestellten Maßnahmen können dabei natürlich jeweils auf mehrere Rohrleitungen 100 angewendet werden.

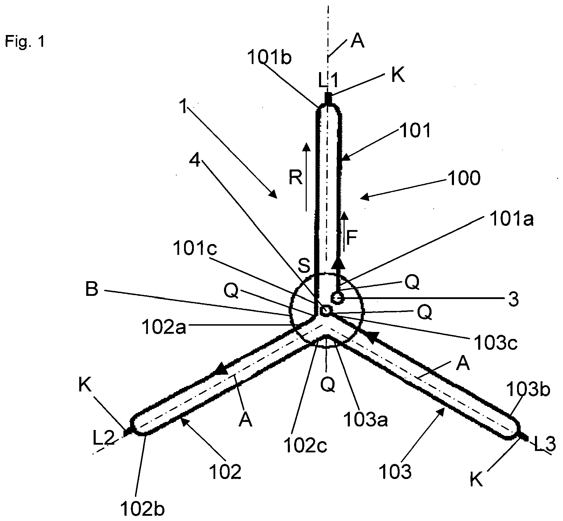

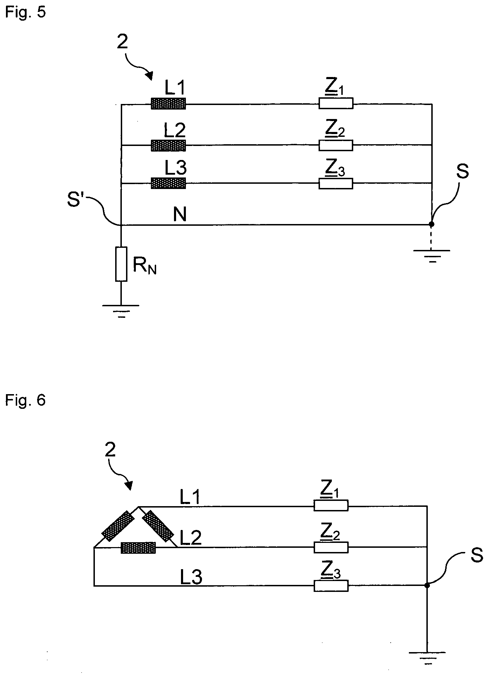

Gemäß Figur 1 kann bei einer Drehstromdirektheizung einer Rohrleitung 100 in einer erfindungsgemäßen Einrichtung 1 zum Heizen eines Fluides F ein Sternpunkt S geschaffen werden. Dabei werden die drei Phasen L1, L2 und L3 eines Drehstromsystems bzw. einer Drehspannungsquelle 2 (vgl. Fig. 5) an die Schenkel 101, 102, 103 der Rohrleitung 100 und vorzugsweise der N-Leiter (Neutralleiter), sofern vorhanden, an den Sternpunkt S angeschlossen. Bei einer in der Energieversorgung üblichen starren bzw. niederohmigen Erdung des N-Anschlusses bzw. des Sternpunktes S' der Spannungsquelle 2 mit der Erde (PE) und einem Anschluss des Neutralleiters N an den Sternpunkt S der Rohrleitung 100 kann auf eine Erdung des Sternpunktes S an der Rohrleitung 100 verzichtet werden.

Gemäß den Figuren 5 und 6 kann die Erfindung sowohl im Rahmen eines Netzes mit (vorzugsweise drei) Außenleitern und Neutralleiter (z.B. TN-Netz) als auch bei einem Netz ohne Neutralleiter (z.B. IT-Netz) angewendet werden.

Fig. 5 zeigt die drei Außenleiter L1, L2, L3 sowie den Neutralleiter N der Spannungsquelle 2, wie sie z.B. bei einem TN-Netz vorhanden sind. Der Sternpunkt S' der Spannungsquelle 2, mit dem der Neutralleiter N elektrisch leitend verbunden ist, ist dabei über einen Widerstand $R_N$ geerdet, wobei insbesondere $R_N=0$ sein kann (starre Erdung) oder z.B. niederohmig. $\underline{Z}_1$, $\underline{Z}_2$, $\underline{Z}_3$ stellen die Lasten bzw. Impedanzen dar, die durch die mindestens eine Rohrleitung 100 bzw. deren Schenkel 101, 102, 103 gebildet werden. Diese sind im Sternpunkt S der Last bzw. Rohrleitung 100 zusammengeschaltet, wobei der Neutralleiter N mit dem Sternpunkt S elektrisch leitend verbunden ist. Bei einer starren Betriebserdung des Sternpunktes S' der Spannungsquelle 2 ($R_N=0$) kann eine Erdung des Sternpunktes S entfallen, ist aber bevorzugt vorhanden.

Figur 6 zeigt ein Dreileiternetz (z.B. IT-Netz), bei dem kein Neutralleiter N vorhanden ist. Hier ist der Sternpunkt S, der durch Zusammenschalten der Impedanzen $\underline{Z}_1$, $\underline{Z}_2$, $\underline{Z}_3$ gebildet wird, bevorzugt starr geerdet.

Im Folgenden wird ohne Beschränkung der Allgemeinheit von drei Außenleitern L1, L2, L3 sowie einem Neutralleiter N ausgegangen. Es kann jedoch auf den Neutralleiter N verzichtet werden (siehe oben) oder die Zahl der Außenleiter variiert werden (siehe oben).

Im Einzelnen erstreckt sich ein erster Schenkel 101 der Rohrleitung 100 ausgehend von einem ersten Endabschnitt 101a bzw. vom Einlass 3, über den Fluid F in die Rohrleitung 100 eingespeist wird, entlang einer Längsachse A zu einem Umkehrbogen eines mittleren Abschnitts 101b des ersten Schenkels 101, von dem aus sich der mittlere Abschnitt 101b des erste Schenkels 10 zurück zu einem zweiten Endabschnitt 101c erstreckt, der benachbart zum ersten Endabschnitt 101a in einem zentralen Bereich B angeordnet ist. Der zweite Endabschnitt 101c des ersten Schenkels 101 geht in einen ersten Endabschnitt 102a des zweiten Schenkels 102 über, der sich in analoger Weise über einen Umkehrbogen seines mittleren Abschnitts 102b zu einem zweiten Endabschnitt 102c des zweiten Schenkels 102 erstreckt, der wiederum in einen ersten Endabschnitt 103a des dritten Schenkels 103 übergeht, der sich in analoger Weise über einen Umkehrbogen seines mittleren Abschnittes 103b zu einem zweiten Endabschnitt 103c erstreckt, an dem ein Auslass 4 zum Auslassen des (erhitzten) Fluids F aus der Rohrleitung 100 vorgesehen ist. Die drei Längsachsen A der schleifenförmig ausgebildeten Schenkel 101, 102, 103 sind gemäß Fig. 1 bevorzugt sternförmig angeordnet, d.h., je zwei benachbarte Schenkel 101, 102; 102, 103; 103, 101 schließen einen Winkel von 120° ein.

Vorliegend ist an jedem Umkehrbogen eines mittleren Abschnittes 101b, 102b, 103b einer Schleife 101, 102, 103 ein Kontakt K zu einem Außenleiter L1, L2 bzw. L3 einer Drehstromquelle 2 vorgesehen, wobei die Endabschnitte 101a, 101c, 102a, 102c, 103a, 103c über Kontakte Q mit dem Sternpunkt S verbunden sind. Dabei sind bevorzugt miteinander verbundene Endabschnitte 101c, 102a; 102c, 103a der Schenkel 101, 102, 103 über einen gemeinsamen Kontakt Q am Übergang der jeweiligen Endabschnitte mit dem Sternpunkt S bzw. mit dem Neutralleiter N verbunden.

Die Anordnung gemäß Figur 1 kann natürlich auch bei allgemein M Phasen angewendet werden, wobei M eine natürliche Zahl größer gleich zwei ist. Es werden dann entsprechend M Schenkel vorgesehen und wie oben beschrieben verschaltet.

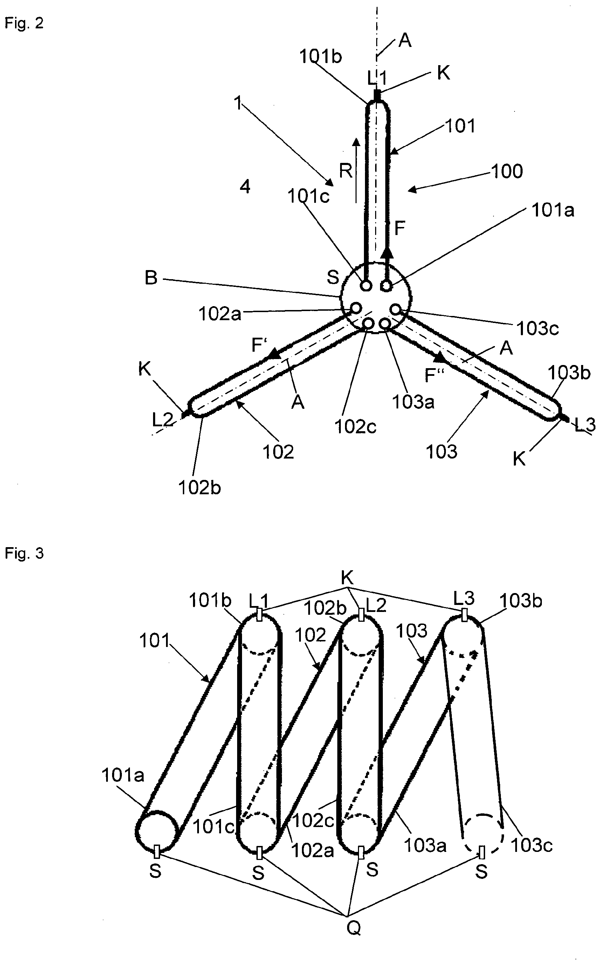

Weiterhin können gemäß Figur 2 bei einer Anordnung gemäß Figur 1 die Schenkel 101, 102, 103 separat zueinander ausgebildet sein, so dass sie von einzelnen Fluidströmen F, F', F" unabhängig voneinander durchströmbar sind. Die ersten Endabschnitte 101a, 102a, 103a können dabei als Einlässe für die Fluidströme F, F', F" und die zweiten Endabschnitte 101c, 102c, 103c als Auslässe für die Fluidströme ausgebildet sein. Wobei jene Endabschnitte 101a, 102a, 103a bzw. 101c, 102c, 103c wiederum mit dem Sternpunkt S verbunden sind.

Fig. 3 zeigt eine Variation des Verlaufs der Schenkel 101, 102, 103, wobei diese nun im Unterschied zur Figur 1 nebeneinander verlaufen.

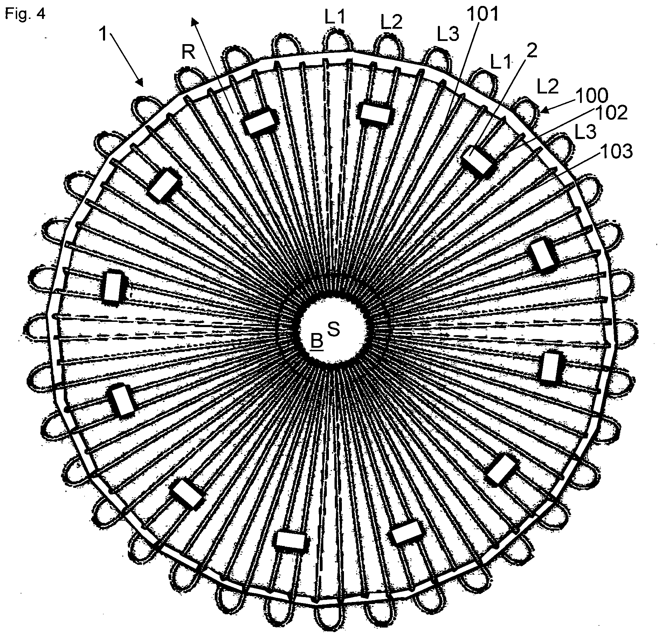

Diese Konfiguration ermöglicht prinzipiell eine Anordnung von mehreren Rohrleitungen 100 nach Art der Figur 3 nebeneinander, wie sie in Fig. 4 gezeigt ist, wobei hier die einzelnen Schenkel 101, 102, 103 jeweils in radialer Richtung R ausgehend von einem zentralen Bereich B nach außen verlaufen, in dem die einzelnen Endabschnitte angeordnet sind, und dort mit dem Sternpunkt S verbunden sind. Die Umkehrbögen der einzelnen, schlaufenförmig ausgebildeten Schenkel 101, 102, 103 liegen nun in radialer Richtung R weiter außen auf einem gedachten Kreis und sind jeweils mit einer Phase L1, L2 bzw. L3 einer Drehstromquelle 2 verbunden.

Jeder Rohrleitung 100 ist dabei einer Drehstromquelle 2 zugeordnet, die vorzugsweise oberhalb der Schenkel angeordnet ist und radial weiter innen angeordnet ist als die Umkehrbögen. Hierdurch können die Zuleitungen zu S (bzw N) sowie L1, L2, L3 minimiert werden. Die Rohrleitungen 100 weisen jeweils drei schleifenförmige Schenkel 101, 102, 103 auf, deren Umkehrbögen jeweils mit einer der Außenleiterphase L1, L2 bzw. L3 der zugeordneten Spannungsquelle 2 verbunden sind.

Der Übersichtlichkeit halber ist nur eine Rohrleitung 100 in der Fig. 4 bezeichnet. Die Rohrleitungsabschnitte 100 gemäß Fig. 4 können, wie gezeigt, in Serie angeordnet sein, so dass sie nacheinander vom Fluid F durchflossen werden können. Es ist jedoch auch möglich, im zentralem Bereich B einen Verteiler vorzusehen, der das Fluid F auf die einzelnen Rohrleitungen 100 mit den jeweils drei Schenkeln 101, 102, 103 verteilt, so dass diese parallel vom Fluid F durchflossen werden. Hiernach kann das (erhitzte) Fluid F wieder zusammengeführt und seiner weiteren Verwendung zugeführt werden.

In den vorstehend beschriebenen Beispielen erzeugt der Dreiphasenstrom in den Schenkeln 101, 102, 103 jeweils aufgrund des elektrischen Widerstands der Schenkel 101, 102, 103 Joulsche Wärme, die auf das in den Schenkeln 101, 102, 103 fließende Fluid F übertragen wird, wobei dieses erwärmt wird.

Natürlich kann die Anordnung gemäß Figuren 3 und 4 ebenfalls auf M Phasen (M größer oder gleich zwei) verallgemeinert werden.

Die in den Figuren 1 bis 4 gezeigte Konfiguration einer Drehstrom-Direkt-Beheizung bzw. die dort gezeigte sternförmige Anordnung der einzelnen Schenkel 101, 102, 103 ist jedoch nicht zwingend erforderlich. Im Allgemeinen ist jedwede geometrische Anordnung von Rohrleitungen 100 bzw. Schenkeln 101, 102, 103 denkbar. Das erfindungsgemäße Verfahren bzw. die erfindungsgemäße Einrichtung 1 ist prinzipiell bei allen Drücken, Temperaturen, Abmessungen, etc. anwendbar.

In der technischen Ausführung werden wegen des höheren spezifischen Widerstandes Edelstähle gegenüber Kohlenstoffstählen für die Rohrleitungen 100 bevorzugt. Weiterhin wird vorzugsweise die Zuleitung des Mehrphasen- bzw. Drehphasenwechselstroms mit einem deutlich niedrigeren Widerstand als die das Fluid F führende Rohrleitung ausgeführt, um die Wärmeerzeugung der Zuleitung zu minimieren, da diese in der Regel nicht erwünscht ist.

Die erfindungsgemäße Lösung ist insbesondere bei der Beheizung von Medien, die eine Isolationsminderung verursachen (z.B. Verkokung bei Spaltöfen), mit Vorteil anwendbar. Es besteht vorliegend ein vergleichsweise geringes Risiko eines unerwünschten Stromflusses, so dass ggf. sogar auf eine eingangs erwähnt AbschaltEinrichtung verzichtet werden kann.

Des Weiteren besteht die Möglichkeit, die Erwärmung in den jeweils drei Schenkeln 101, 102, 103 zu steuern, indem der Stromfluss der jeweiligen Phasen L1, L2, L3 entsprechend eingestellt wird (das gilt auch bei M Phasen mit M größer oder gleich zwei).

Grundsätzlich kann die erfindungsgemäße Erwärmung eines Fluides bei allen Medien in elektrisch leitfähigen Rohrleitungen angewendet werden. Bei sehr gut leitenden Flüssigkeiten (im Vergleich zu der elektrischen Leitfähigkeit der Rohrleitung) muss diese Tatsache ggf. in die Berechnung des Stromflusses einbezogen werden. Der geometrische Verlauf der Rohrleitungen bzw. Rohrleitungsabschnitte ist mit Vorteil flexibel und kann an die jeweiligen Anforderungen angepasst werden. Weiterhin kann das Rohrleitungsmaterial an die Prozessanforderungen angepasst werden. Ströme, Spannungen und die Frequenz können passend zur Geometrie gewählt werden und unterliegen keiner grundsätzlichen Limitierung. Die maximal erreichbare Temperatur wird durch das eingesetzte Rohrleitungsmaterial begrenzt.

### Bezugszeichenliste

| | |
|---|---|
| 1 | Einrichtung |
| 2 | Drehstromquelle |
| 3 | Einlass |
| 4 | Auslass |
| 100 | Rohrleitung |
| 101, 102, 103 | Schenkel |
| 101a, 102a, 103a | Erster Endabschnitt |
| 101b, 102b, 103b | Mittlerer Abschnitt |
| 101c, 102c, 103c | Zweiter Endabschnitt |
| L1, L2, L3 | Außenleiter |
| B | Zentraler Bereich |
| N | Neutralleiter |
| K, Q | Elektrische Kontakte |
| F, F', F" | Fluid |
| A | Längsachse |
| R | Radiale Richtung |
| S | Sternpunkt |
| S' | Sternpunkt Spannungsquelle |

**Patentansprüche**

1. Einrichtung zum Heizen eines Fluides, mit:

   - einer Mehrzahl an elektrisch leitfähigen Rohrleitungen (100) zur Aufnahme des Fluides (F), und
   - einer Mehrzahl an Spannungsquellen (2), **dadurch gekennzeichnet, dass**
   - jeder Rohrleitung (100) je eine Spannungsquelle (2) zugeordnet ist, die mit der jeweiligen Rohrleitung (100) verbunden ist, wobei die jeweilige Spannungsquelle (2) dazu ausgebildet ist, einen elektrischen Strom in der jeweiligen Rohrleitung (100) zu erzeugen, der die jeweilige Rohrleitung (100) zum Heizen des Fluides (F) erwärmt,
   - wobei die jeweilige Spannungsquelle (2) zumindest M Außenleiter (L1,...,LM) aufweist, wobei M eine natürliche Zahl größer oder gleich zwei ist, und wobei die jeweilige Spannungsquelle (2) dazu ausgebildet ist, an ihren Außenleitern (L1,...,LM) eine Wechselspannung bereitzustellen,
   - wobei jene Wechselspannungen gegeneinander um $2\pi/M$ phasenverschoben sind, und wobei die Außenleiter (L1,...,LM) der jeweiligen Spannungsquelle (2) so mit der jeweiligen Rohrleitung (100) elektrisch leitend verbunden sind, dass eine Sternschaltung gebildet wird, bei der jeder Außenleiter (L1,...,LM) über zumindest einen Teil der jeweiligen Rohrleitung (100) elektrisch leitend mit dem Sternpunkt (S) der Sternschaltung verbunden ist.

2. Einrichtung nach Anspruch 1, **dadurch gekennzeichnet, dass** Rohrleitungen (100) als Reaktionsrohre eines Reformers ausgebildet sind.

3. Einrichtung nach Anspruch 1 oder 2, **dadurch gekennzeichnet, dass** die Spannungsquellen (2) jeweils einen Neutralleiter (N) aufweisen, wobei insbesondere der jeweilige Neutralleiter (N) elektrisch leitend mit dem Sternpunkt (S) verbunden ist.

4. Einrichtung nach einem der vorhergehenden Ansprüche, **dadurch gekennzeichnet, dass** M gleich drei ist.

5. Einrichtung nach einem der vorhergehenden Ansprüche, **dadurch gekennzeichnet, dass** die Rohrleitungen (100) M Schenkel (101) aufweisen, wobei jeder Schenkel (101) einen ersten und einen zweiten Endabschnitt (101a, 101c) sowie einen mittleren Abschnitt (101b) aufweist, der die beiden Endabschnitte (101a, 101c) miteinander fluidleitend sowie elektrisch leitend verbindet.

**6.** Einrichtung nach Anspruch 5, **dadurch gekennzeichnet, dass** die beiden Endabschnitte (101a, 101c, 102a, 102c, 103a, 103c) des jeweiligen Schenkels (101, 102, 103) elektrisch leitend mit dem Sternpunkt (S) verbunden sind.

**7.** Einrichtung nach einem der Ansprüche 5 bis 6, **dadurch gekennzeichnet, dass** die mittleren Abschnitte (101b, 102b, 103b) der Schenkel (101, 102, 103) jeweils mit einem zugeordneten Außenleiter (L1, L2, L3) der jeweiligen Spannungsquelle (2) elektrisch leitend verbunden sind.

**8.** Einrichtung nach Anspruch 4 oder einem der Ansprüche 5 bis 7 soweit rückbezogen auf Anspruch 4, **dadurch gekennzeichnet, dass** der zweite Endabschnitt (101c) des ersten Schenkels (101) mit dem ersten Endabschnitt (102a) des zweiten Schenkels (102) fluidleitend sowie elektrisch leitend verbunden ist, insbesondere einstückig an diesen angeformt ist, und dass der zweite Endabschnitt (102c) des zweiten Schenkels (102) mit dem ersten Endabschnitt (103a) des dritten Schenkels (103) fluidleitend sowie elektrisch leitend verbunden ist, insbesondere einstückig an diesen angeformt ist, wobei insbesondere der erste Endabschnitt (101a) des ersten Schenkels (101) einen Einlass (3) zum Einspeisen des Fluides (F) in die jeweilige Rohrleitung (100) bildet, und wobei insbesondere der zweite Endabschnitt (103c) des dritten Schenkels (103) einen Auslass (4) zum Auslassen des Fluides (F) aus der jeweiligen Rohrleitung (100) bildet.

**9.** Einrichtung nach einem der Ansprüche 5 bis 7, **dadurch gekennzeichnet, dass** die Schenkel (101, 102, 103) nicht miteinander in Fluidverbindung stehen und dazu ausgebildet sind, separat voneinander je ein zu heizendes Fluid (F, F', F") zu führen.

**10.** Einrichtung nach einem der Ansprüche 5 bis 9, **dadurch gekennzeichnet, dass** die Schenkel (101, 102, 103) jeweils als Schleife ausgebildet sind, wobei der mittlere Abschnitt (101b, 102b, 103b) des jeweiligen Schenkels (101, 102, 103) ein Ende der jeweiligen Schleife (101, 102, 103) ausbildet, wobei insbesondere im Bereich des jeweiligen Endes der jeweils zugeordnete Außenleiter (L1, L2, L3) mit dem jeweiligen Schenkel (101, 102, 103) elektrisch leitend verbunden ist.

**11.** Einrichtung nach einem der Ansprüche 5 bis 10, **dadurch gekennzeichnet, dass** sich die Schenkel (101, 102, 103) jeweils entlang einer Längsachse (A) erstrecken, wobei insbesondere die Schenkel (101, 102, 103), insbesondere entlang der jeweiligen Längsachse (A), die gleiche Länge aufweisen.

**12.** Einrichtung nach einem der Ansprüche 5 bis 11, **dadurch gekennzeichnet, dass** die Endabschnitte (101a, 101c; 102a, 102c; 103a, 103c) der Schenkel (101, 102, 103) der jeweiligen Rohrleitung (100) in einem zentralen Bereich (B) angeordnet sind, von dem aus sich die Schenkel (102, 102, 103) entlang einer radialen Richtung (R) nach außen erstrecken.

**13.** Einrichtung nach Anspruch 11 oder 12, **dadurch gekennzeichnet, dass** die Längsachsen (A) je zweier benachbarter Schenkel (101, 102; 102, 103; 103, 101) einen Winkel von 120° einschließen.

**14.** Einrichtung nach einem der vorhergehenden Ansprüche, **dadurch gekennzeichnet, dass** mehrere oder sämtliche der Rohrleitungen (100) in Serie miteinander in Fluidverbindung stehen, so dass sie nacheinander von dem Fluid (F) durchströmbar sind.

**15.** Einrichtung nach einem der Ansprüche 1 bis 13, **dadurch gekennzeichnet, dass** mehrere oder sämtliche der Rohrleitungen (100) parallel konfiguriert sind, so dass das Fluid (F) auf jene parallel konfigurierten Rohrleitungen (100) aufteilbar ist.

**16.** Verfahren zum Heizen eines Fluides (F) unter Verwendung einer Einrichtung gemäß einem der Ansprüche 1 bis 15, wobei das Fluid die Rohrleitungen der Einrichtung durchströmt und in diesen erhitzt wird, indem die Rohrleitungen durch einen in den Rohrleitungen fließenden Mehrphasenwechselstrom erhitzt werden, so dass den Rohrleitungen Joulesche Wärme erzeugt wird, die auf das Fluid übertragen wird, so dass dieses beim Durchströmen der Rohrleitungen erhitzt wird, und wobei als Fluid ein vorgewärmtes Gemisch aus Kohlenwasserstoffen und Dampf geheizt wird, um die Kohlenwasserstoffe aufzuspalten.

**Claims**

**1.** Device for heating a fluid, comprising

- a plurality of electrically conductive pipelines (100) for accommodating the fluid (F), and
- a plurality of voltage sources (2), **characterized in that**
- in each case one voltage source (2) is assigned to each pipeline (100), said voltage source being connected to the respective pipeline (100), wherein the respective voltage source (2) is designed to generate an electric current in the respective pipeline (100) which heats the respective pipeline (100) in order to heat the fluid (F),
- wherein the respective voltage source (2) has at least M outer conductors (L1,...,LM), where M is a natural number of greater than or equal to two, and wherein the respective voltage source (2) is designed to provide an AC voltage at its outer conductors (L1,...,LM),

- wherein various AC voltages are phase-shifted with respect to one another through $2\pi/M$, and wherein the outer conductors (L1,...,LM) of the respective voltage source (2) are electrically conductively connected to the respective pipeline (100) in such a way that a star circuit is formed, in which each outer conductor (L1,...,LM) is electrically conductively connected to the neutral point (S) of the star circuit over at least part of the respective pipeline (100).

2. Device according to Claim 1, **characterized in that** pipelines (100) are in the form of reaction tubes of a reformer.

3. Device according to Claim 1 or 2, **characterized in that** the voltage sources (2) each have a neutral conductor (N), wherein in particular the respective neutral conductor (N) is electrically conductively connected to the neutral point (S).

4. Device according to one of the preceding claims, **characterized in that** M is equal to three.

5. Device according to one of the preceding claims, **characterized in that** pipelines (100) have M limbs (101), wherein each limb (101) has a first and a second end section (101a, 101c) and a central section (101b), which fluidically and electrically conductively connects the two end sections (101a, 101c) to one another.

6. Device according to Claim 5, **characterized in that** the two end sections (101a, 101c, 102a, 102c, 103a, 103c) of the respective limb (101, 102, 103) are electrically conductively connected to the neutral point (S).

7. Device according to either of Claims 5 and 6, **characterized in that** the central connections (101b, 102b, 103b) of the limbs (101, 102, 103) are each electrically conductively connected to an assigned outer conductor (L1, L2, L3) of the respective voltage source (2).

8. Device according to Claim 4 or one of Claims 5 to 7 insofar as said claims refer back to Claim 4, **characterized in that** the second end section (101c) of the first limb (101) is fluidically and electrically conductively connected to the first end section (102a) of the second limb (102), in particularly is integrally formed on said first end section, and **in that** the second end section (102c) of the second limb (102) is fluidically and electrically conductively connected to the first end section (103a) of the third limb (103), in particular is integrally formed on said first end section, wherein in particular the first end section (101a) of the first limb (101) forms an inlet (3) for feeding the fluid (F) into the respective pipeline (100), and wherein in particular the second end section (103c) of the third limb (103) forms an outlet (4) for allowing the fluid (F) to pass out of the respective pipeline (100).

9. Device according to one of Claims 5 to 7, **characterized in that** the limbs (101, 102, 103) are not fluidically connected to one another and are designed to each conduct a fluid (F, F', F") to be heated separately from one another.

10. Device according to one of Claims 5 to 9, **characterized in that** the limbs (101, 102, 103) are each in the form of a loop, wherein the central section (101b, 102b, 103b) of the respective limb (101, 102, 103) forms an end of the respective loop (101, 102, 103), wherein in particular in the region of the respective end, the respectively assigned outer conductor (L1, L2, L3) is electrically conductively connected to the respective limb (101, 102, 103).

11. Device according to one of Claims 5 to 10, **characterized in that** the limbs (101, 102, 103) each extend along a longitudinal axis (A), wherein in particular the limbs (101, 102, 103) have the same length, in particular along the respective longitudinal axis (A).

12. Device according to one of Claims 5 to 11, **characterized in that** the end sections (101a, 101c; 102a, 102c; 103a, 103c) of the limbs (101, 102, 103) of the respective pipeline (100) are arranged in a central region (B), from which the limbs (102, 102, 103) extend outwards along a radial direction (R).

13. Device according to Claim 11 or 12, **characterized in that** the longitudinal axes (A) of in each case two adjacent limbs (101, 102; 102, 103; 103, 101) enclose an angle of 120°.

14. Device according to one of the preceding claims, **characterized in that** a plurality of or all of the pipelines (100) are fluidically connected in series with one another, with the result that the fluid (F) can flow through said pipelines successively.

15. Device according to one of Claims 1 to 13, **characterized in that** a plurality of or all of the pipelines (100) are configured to be parallel, with the result that the fluid (F) can be divided among those pipelines (100) configured to be parallel.

16. Method for heating a fluid (F) using a device according to one of Claims 1 to 15, wherein the fluid flows through the pipelines of the device and is heated in said pipelines by virtue of the pipelines being heated by a polyphase alternating current flowing in the pipelines, with the result that Joulean heat is generated to the pipelines, and this is transferred to the fluid so that said fluid is heated as it flows through the pipelines, and wherein a preheated mixture of hydrocarbons and steam is heated as fluid in order to crack the hydrocarbons.

## Revendications

1. Dispositif de chauffage d'un fluide, doté :

   - d'une pluralité de conduites électriquement conductrices (100) destinées à recevoir le fluide (F), et
   - d'une pluralité de sources de tension (2), **caractérisé en ce que**
   - à chaque conduite (100) est ordonnée une source de tension (2), laquelle est reliée à la conduite respective (100), dans lequel la source de tension respective (2) est réalisée de façon à produire un courant électrique dans la conduite respective (100), lequel fait chauffer la conduite respective (100) afin de chauffer le fluide (F),
   - dans lequel la source de tension respective (2) comporte au moins M conducteurs externes (L1, ..., LM), dans lequel M est un entier naturel supérieur ou égal à deux, et dans lequel la source de tension respective (2) est réalisée de façon à fournir une tension alternative à ses conducteurs externes (L1, ..., LM),
   - dans lequel les tensions alternatives ont un décalage de phase de $2\pi/M$ l'une par rapport à l'autre, et dans lequel les conducteurs externes (L1, ..., LM) de la source de tension respective (2) sont reliés de manière électriquement conductrice à la conduite respective (100) de façon à former une connexion en étoile, où chaque conducteur externe (L1, ..., LM) est relié électriquement au point neutre (S) de la connexion en étoile par le biais d'au moins une partie de la conduite respective (100).

2. Dispositif selon la revendication 1, **caractérisé en ce que** les conduites (100) sont réalisées comme tubes de réaction d'un reformeur.

3. Dispositif selon la revendication 1 ou 2, **caractérisé en ce que** les sources de tension (2) comportent respectivement un conducteur neutre (N), dans lequel, en particulier, le conducteur neutre (N) respectif est relié de manière électriquement conductrice au point neutre (S).

4. Dispositif selon l'une des revendications précédentes, **caractérisé en ce que** M est égal à trois.

5. Dispositif selon l'une des revendications précédentes, **caractérisé en ce que** les conduites (100) comportent M pattes (101), dans lequel chaque patte (101) comporte une première et une deuxième section terminale (101a, 101c) ainsi qu'une section médiane (101b), laquelle relie fluidiquement et électriquement les deux sections terminales (101a, 101c).

6. Dispositif selon la revendication 5, **caractérisé en ce que** les deux sections terminales (101a, 101c, 102a, 102c, 103a, 103c) de la patte respective (101, 102, 103) sont reliées de manière électriquement conductrice au point neutre (S).

7. Dispositif selon l'une des revendications 5 à 6, **caractérisé en ce que** les sections médianes (101b, 102b, 103b) des pattes (101, 102, 103) sont respectivement reliées de manière électriquement conductrice à un conducteur externe (L1, L2, L3) ordonné de la source de tension respective (2).

8. Dispositif selon la revendication 4 ou l'une des revendications 5 à 7 pour autant qu'elle renvoie à la revendication 4, **caractérisé en ce que** la deuxième section terminale (101c) de la première patte (101) est reliée de manière aussi bien fluidique qu'électrique à la première section terminale (102a) de la deuxième patte (102), en particulier formée d'une pièce à celle-ci, et **en ce que** la deuxième section terminale (102c) de la deuxième patte (102) est reliée de manière aussi bien fluidique qu'électrique à la première section terminale (103a) de la troisième patte (103), en particulier formée d'une pièce sur celle-ci, dans lequel en particulier la première section terminale (101a) de la première patte (101) forme une admission (3) pour l'injection du fluide (F) dans la conduite respective (100), et dans lequel en particulier la deuxième section terminale (103c) de la troisième patte (103) forme une évacuation (4) pour l'évacuation du fluide (F) hors de la conduite respective (100).

9. Dispositif selon l'une des revendications 5 à 7, **caractérisé en ce que** les pattes (101, 102, 103) ne sont pas raccordées fluidiquement les unes aux autres et sont réalisées pour guider un fluide à chauffer (F, F', F") séparément les unes des autres.

10. Dispositif selon l'une des revendications 5 à 9, **caractérisé en ce que** les pattes (101, 102, 103) sont respectivement réalisées comme boucles, dans lequel la section médiane (101b, 102b, 103b) de la patte respective (101, 102, 103) réalise une extrémité de la boucle respective (101, 102, 103), dans lequel en particulier dans la zone de l'extrémité respective, le conducteur externe ordonné respectif (L1, L2, L3) est relié de manière électriquement conductrice à la boucle respective (101, 102, 103).

**11.** Dispositif selon l'une des revendications 5 à 10, **caractérisé en ce que** les pattes (101, 102, 103) s'étendent respectivement le long d'un axe longitudinal (A), dans lequel en particulier les pattes (101, 102, 103) possèdent la même longueur, en particulier le long de l'axe longitudinal respectif (A).

**12.** Dispositif selon l'une des revendications 5 à 11, **caractérisé en ce que** les sections terminales (101a, 101c ; 102a, 102c ; 103a, 103c) des pattes (101, 102, 103) de la conduite respective (100) sont agencées dans une zone centrale (B), à partir de laquelle les pattes (102, 102, 103) s'étendent vers l'extérieur le long d'une direction radiale (R).

**13.** Dispositif selon la revendication 11 ou 12, **caractérisé en ce que** les axes longitudinaux (A) de deux pattes consécutives (101, 102 ; 102, 103 ; 103, 101) forment un angle de 120°.

**14.** Dispositif selon l'une des revendications précédentes, **caractérisé en ce que** plusieurs ou l'ensemble des conduites (100) sont reliées fluidiquement en série les unes avec les autres, de sorte qu'elles peuvent être parcourues par le fluide (F) les unes après les autres.

**15.** Dispositif selon l'une des revendications 1 à 13, **caractérisé en ce que** plusieurs ou l'ensemble des conduites (100) sont configurées en parallèle, de sorte que le fluide (F) peut être réparti sur ces conduites (100) configurées en parallèle.

**16.** Procédé de chauffage d'un fluide (F) en utilisant un dispositif selon l'une des revendications 1 à 15, dans lequel le fluide parcourt les conduites du dispositif et est chauffé dans ceux-ci, les conduites étant chauffées par un courant alternatif multiphasé circulant dans les conduites, de sorte qu'une chaleur est produite par effet Joule sur les conduites, laquelle est transmise au fluide, de sorte que celui-ci est chauffé lors du parcours des conduites, et dans lequel un mélange préchauffé d'hydrocarbures et de vapeur est utilisé comme fluide, afin de décomposer les hydrocarbures.

Fig. 1

Fig. 2

101b
L1
K
A
1
101
R
100
4
101c
F
101a
B
S
102a
103c
F'
A
K
A
F'''
103b
L2
103a
L3
102c
102
103
K
102b

Fig. 3

K
101b
L1
102b
L2
L3
103b
101
102
103
101a
101c
102c
S
102a
S
103a
S
103c
S
Q

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2362628 C3